Europäisches Patentamt

European Patent Office

Office européen des brevets

(19)

(11)     **EP 1 708 384 A1**

(12)     # EUROPEAN PATENT APPLICATION

(43) Date of publication:
**04.10.2006 Bulletin 2006/40**

(51) Int Cl.:
***H04B 7/005*** [(2006.01)]

(21) Application number: **06251056.5**

(22) Date of filing: **28.02.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | • **Masoomzadeh-Fard, Ali**<br>**Marlboro,**<br>**New Jersey 07746 (US)**<br>• **Meyers, Martin Howard**<br>**Montclair,**<br>**New Jersey 07043 (US)**<br>• **Nabhane, Walid Elias**<br>**Bedminster,**<br>**New Jersey 07921 (US)** |
| (30) Priority: **29.03.2005 US 91754** | |
| (71) Applicant: **LUCENT TECHNOLOGIES INC.**<br>**Murray Hill, New Jersey 07974-0636 (US)** | (74) Representative: **Cockayne, Gillian et al**<br>**Lucent Technologies EUR-IP UK Ltd**<br>**Unit 18, Core 3**<br>**Workzone**<br>**Innova Business Park**<br>**Electric Avenue**<br>**Enfield, EN3 7XU (GB)** |
| (72) Inventors:<br>• **Dominique, Francis**<br>**Rockaway,**<br>**New Jersey 07866 (US)** | |

(54)     **Method of detecting mobile stations not following power control commands**

(57)     In a method of detecting a mobile station that is not following a power control command, for each time slot, a received signal-to-interference ratio (SIR) value of the mobile as measured by a given base station is compared with a given average SIR target value. An error metric may be generated for each slot based on a difference between the measured SIR and average SIR target values. The generated error metrics may be averaged over a given time duration to determine at least one (or more) average error value(s), and the mobile station is determined as violating a power control command if the at least one or more average error value(s) exceed a given threshold.

## FIG. 1

EP 1 708 384 A1

## Description

## BACKGROUND OF THE INVENTION

Field of the Invention

The present invention relates generally to methods of detecting mobile stations not following received power control commands in wireless communication systems or networks.

Description of the Related Art

Wireless communication systems typically include a plurality of base stations, where one or more base stations may serve a geographic area commonly referred to as a cell. Users of the wireless communication system may communicate with each other and/or with the communication system. The physical equipment at the base stations may be referred to as system equipment. In wireless communication systems, communication can occur between two mobile stations (e.g., two cell phones, wireless computers, PDAs, etc.) and/or between mobiles and system equipment.

The communication system typically may operate in accordance with established rules promulgated by governmental and/or industry groups. These rules are typically established as standards by which wireless communication systems are to be in compliance with. The standards may contain various protocols that dictate the operation of the wireless communication systems. Generally, a protocol may be understood as a set of rules that may specify how communication (voice and/or data) within a given communication system may be initiated, maintained and/or terminated.

A mobile located in a particular cell being served by a base station communicates with other mobiles and/or with other communication systems via the base station. The signals from the mobile may be transmitted to a receiving mobile or to another communication system via the base station of the cell within which the mobile is located.

As a mobile move through cells being served by different base stations, communication from the mobile may be handled by different base stations. For example, communication for a mobile moving from one cell to another cell may be transferred from one base station to another base station of the cell. The process in which communication for a mobile is transferred from one base station (i.e., the 'original' base station) to another base station (i.e., the 'target' base station) is known as "handoff." A mobile located at the edge of a serving cell and in the vicinity or near a target cell typically will request a handoff to the target cell, depending on the relative strength of communication signals of neighboring base stations.

In wireless communication systems or networks, the base stations typically may transmit pilot signals periodically. The mobiles receive these pilot signals and may be configured so as to measure the strength of these pilot signals. A mobile may request a handoff to one or more base stations based on the relative measured strengths of the pilot signals of the base stations. The network may also trigger a handoff procedure based on periodic measurement reports received from a given mobile, or for other reasons such as congestion in a cell that a given mobile is connected to.

One type of handoff used in several spread spectrum-based wireless communication systems such as Code Division Multiple Access (CDMA) systems is referred to as a soft hand off. In a soft handoff, communication with the target base station may be established prior to communication with the original base station is terminated. Also during soft handoff, the mobile may typically be in simultaneous communication with greater than one base station. In this manner, no interruption of communication to and from the mobile occurs. Eventually, when the soft handoff has terminated, the mobile communicates with another mobile or another communication system via the target base station.

Power control is used in both the downlink (base station to mobile) and uplink (mobile to base station) of CDMA systems to reduce interference and/or to ensure a desired target block error rate. For each dedicated channel, there is a closed loop to control transmitter power. This is commonly known as inner loop power control.

For downlink power control, the mobile measures received signal to interference ratio (SIR) and may issue an up power command in the uplink if the measured SIR is below a given threshold. Otherwise, the mobile issues a down power command in the uplink to the base station where measured SIR exceeds the threshold. This power control command (TPC) may be transmitted periodically to the base station(s) to which mobile is connected. The period of TPC may be referred to as a slot or power control group. If a mobile is in soft handoff, all base stations in communication with the mobile receive the TPC command that is transmitted in the uplink.

For uplink power control, each base station measures received SIR of a given mobile and may issue an up power command on the downlink to the mobile, if the measured SIR is below a given threshold. This threshold may be referred to as 'SIR target'. If the measured SIR exceeds SIR target, the base station issues a down power command. The SIR target itself may be adjusted based on the number of errors in the received blocks from the mobile. If a received block is erroneous the SIR target is raised, otherwise the SIR target is lowered where the received block is not erroneous.

During soft handover, more than one base station may send TPC commands to the mobile. There are several ways in which a mobile may change its power due to different TPC commands received from each base station. As a general rule, if one base station sends a down power command, and that command was reliably received at the mobile, the mobile will reduce its transmit power, ignoring the other commands. This is done since it is typically sufficient that only one base station decodes the data properly, while reducing interference for other users. For the same reasons, as a general rule, the mobile will raise its transmit power if all reliably received TPC commands are up power commands.

However there may be situations where a mobile ignores the TPC commands from some of the base stations. A first reason may be where the received TPC command is not reliable. A mobile may ignore the TPC command if the received command is not reliable. The reliability criterion may be specified at the mobile, for example. This situation is typically common during handoff, when the received signal from some base stations is weak and the received TPC commands are not reliable. The receiving mobile may employ a quality metric and compares that metric to a given threshold to decide whether to use the TPC command, or ignore it. This comparison is applicable in a simplex mode (non-handoff mode) of operation or when the mobile is in handoff mode.

Another situation where a mobile might ignore TPC commands from one or more base stations is when a new leg (new base station) is added to the active set (of base stations in communication with a given mobile) on the network side. In this situation, the radio network controller (RNC) at the network sends a message to the mobile to update its active set. During the time that the new leg is added to the active set on network side, until the mobile updates its active set, any TPC commands sent from the new leg are ignored at the mobile.

Another situation where a mobile might ignore TPC commands from one or more base stations is when a mobile drops a leg. The signaling procedure for dropping a leg may be generally explained as follows. When the RNC decides to drop a leg, a message is sent on the downlink to the mobile. After dropping that leg from its active set, the mobile sends a confirmation message on the uplink to the network. The RNC updates the active set when the confirmation is received from mobile. During the period from when the mobile updates its active set until the base station (leg) being dropped stops its transmission to the mobile, the TPC commands from the leg to be dropped are ignored by the mobile.

If a situation arises which is not applicable to any of the above cases, i.e., the TPC command is not reliable or the mobile is adding or dropping a leg, the mobile must follow the commands received from the base station(s). Therefore, if the mobile ignores the downlink TPC commands due to any other reason, the RNC should be able to identify and drop that mobile. Otherwise, the mobile might transmit at an unnecessary high transmit power, which may increase uplink interference and cause a reduction in the system or network capacity.

## SUMMARY OF THE INVENTION

An example embodiment of the present invention is directed to a method of detecting a mobile station that is not following a power control command. In the method, and for each time slot, a received signal-to-interference ratio (SIR) value of the mobile as measured by a given base station is compared with a given average SIR target value. An error metric may be generated for each slot based on a difference between the measured SIR and average SIR target values. The generated error metrics may be averaged over a given time duration to determine at least one (or more) average error value(s), and the mobile station is determined as violating a power control command if the at least one (or more) average error value(s) exceed a given threshold.

Another example embodiment of the present invention is directed to a method of determining whether to drop a call associated with a mobile station that is not following a power control command. In the method, an error metric may be generated on a slot-by-slot basis based on a difference between a measured SIR value of the mobile at a given base station and a given, average SIR target value. The generated error metrics may be averaged over a given time duration to determine at least one (or more) average error value(s). If the at least one (or more) average error value(s) exceeds a given threshold, the call associated with the mobile is dropped.

## BRIEF DESCRIPTION OF THE DRAWINGS

Example embodiments of the present invention will become more fully understood from the detailed description given herein below and the accompanying drawings, wherein like elements are represented by like reference numerals, which are given by way of illustration only and thus are not limitative of the example embodiments of the present invention.

FIG. 1 is a flowchart describing a method of detecting a mobile station that is not following a power control command, in accordance with an example embodiment of the present invention.

FIG. 2 is a flowchart describing a method of determining whether to drop a call associated with a mobile station that is not following a power control command, in accordance with an example embodiment of the present invention.

FIGS. 3 and 4 are graphs illustrating results from a simulation of the detection methodology in accordance with the example embodiments of the present invention.

## DETAILED DESCRIPTION OF THE EXAMPLE EMBODIMENTS

Although the following description relates to a network based on one or more of CDMA (IS95, cdma2000 and various technology variations), UMTS (release 99, R4, R5, R6 and above), GSM, 802.11 and/or related technologies, and will be described in this example context, it should be noted that the example embodiments shown and described herein are meant to be illustrative only and not limiting in any way. As such, various modifications will be apparent to those skilled in the art for application to communication systems or networks based on technologies other than the above, which may be in various stages of development and intended for future replacement of, or use with, the above networks or systems.

As used herein, the terms mobile or mobile station may be synonymous to a mobile user, user equipment (UE), user, subscriber, wireless terminal and/or remote station, and may describe a remote user of wireless resources in a wireless communication network. Where used below, the term base station is synonymous with base transceiver station or Node-B and may describe equipment that provides voice and/or data connectivity between a communicafion network and one or more mobile stations.

In general, the example embodiments of the present invention are directed to a methodology which may facilitate identifying or detecting one or more mobiles that are not following downlink TPC commands. The example embodiments also introduce a methodology that may drop a call associated with a given mobile if the mobile does not listen to TPC commands from the network, due to some problems which may be unknown to the network.

As in any detection problem, the proposed methodologies may be adapted so as to reduce the probability of false alarm (detecting mobiles in the three scenarios described above) and to maximize the probability of detection (mobiles ignoring the TPC commands that do not fit in any of the thee above-mentioned scenarios).

In general, for normal mobile behavior during closed loop power control, there should be a mix of up and down power commands. Usually, each time slot (smallest duration over which certain control information including a TPC command is being transmitted) contains an up command or a down command. Therefore, the absolute value of summation of up and down commands, over a window that is large enough relative to a time slot duration, should approach zero.

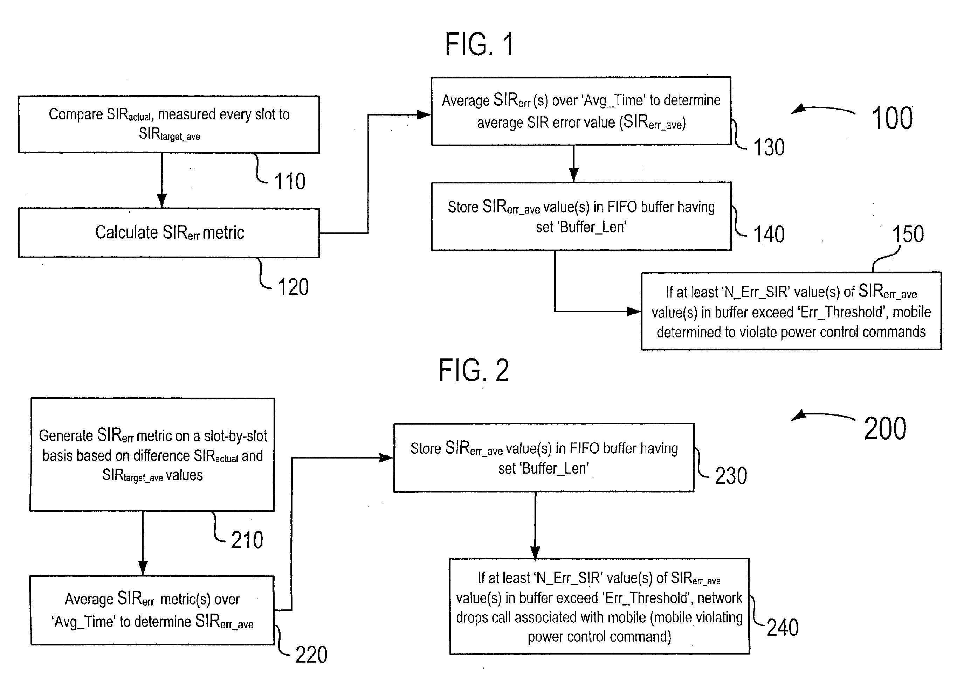

FIG. 1 is a flowchart describing a method of detecting a mobile station that is not following a power control command, in accordance with an example embodiment of the present invention. As shown in FIG. 1, in a method 100, a received SIR value $(SIR_{actual})$, measured in every slot (slot-by-slot basis) by a base station receiver serving the mobile is compared (110) with the average SIR target value ($SIR_{target\_ave}$). The difference between these two metrics may be used to generate an error metric, referred to as $SIR_{err}$, (120). The $SIR_{err}$ may be averaged (130) over a given period or duration of time, referred to as 'Avg_Time', to determine an average $SIR_{err}$ value, which may be referred to as $SIR_{err\_ave}$.

The $SIR_{err\_ave}$ value may then be stored (140) in a First In First Out (FIFO) buffer that has a given buffer length, referred to as 'Buffer_Len'. If at least one, several (or all) stored average SIR error ($SiR_{err\_ave}$) values in the FIFO buffer exceed a given threshold, referred to herein as 'Err_Threshold', it is determined (150) that the mobile is violating power control commands due to some unknown problems at the network. The number of $SIR_{err\_ave}$ values exceeding the Err_Threshold in the buffer needed to report a power control violation may be referred to as N_Err_SIR. N_Err_SIR may be set to any value between 1 and Buffer_Len, for example.

The mobile determined as violating a power control command may thus be violating the power control command for a reason other than the three scenarios described above, i.e., the mobile has determined that the power control command is not reliable, or the mobile is adding a leg to its active set of base stations, or the mobile is dropping a leg from its active set of base stations.

The parameters Err_Threshold, Avg_Time, N_Err_SIR and Buffer_Len may be set in advance to given values, as desired. In selecting these parameters, Err_Threshold, Avg_Time, N_Err_SIR and Buffer_Len should be chosen so as to minimize or reduce the probability of false alarm while maximizing the probability of detection for a mobile that is not listening to TPC commands due to unknown problems at the network.

In general, if choosing substantially small values for these four parameters (i.e., Avg_Time=1 slot, N_Err_SIR=1, Buffer_Len=1, Err_Threshold=0, it is relatively easy to discern that there may always be a given slot that the mobile exceeds the target SIR. Therefore, all mobiles will be seen as violating, which may increase the probability of false alarms (i.e., rejecting good mobiles in the three above-described scenarios (unreliable TPC command, adding leg, dropping leg). On the other hand, selecting substantially large values of Err_Threshold, Avg_Time, N_Err_SIR and Buffer_Len (i.e., in an example where Avg_Time*Buffer_Len is equal to 1 minute, N_Err_SIR = Buffer_Len and the Err_Threshold exceeds the maximum SIR target possible such that no mobiles will be detected) may decrease the probability of detection, potentially resulting in capacity loss. Accordingly, selection of the above-noted parameters should account for the above factors.

FIG. 2 is a flowchart describing a method of determining whether to drop a call associated with a mobile station that is not following a power control command, in accordance with an example embodiment of the present invention. The functions in FIG. 2 are somewhat similar to FIG. 1, thus a detailed explanation is omitted for purposes of brevity. In the method 200 shown in FIG. 2, an error metric $SIR_{err}$ may be generated (210) on a slot-by-slot basis based on a difference between a measured SIR value of the mobile at a given base station $(SIR_{actual})$ and a given, average SIR target value ($SIR_{target\_ave}$). The generated $SIR_{err}$ metrics may be averaged (220) over a given time duration to determine at least one average error value ($SIR_{err\_ave}$), and stored (230) in the FIFO buffer with a Buffer_Len size, as described above. If the at least one (some, or all) of the stored average error value(s) exceeds a given threshold, the call associated with the mobile is dropped (230). The number of $SIR_{err\_ave}$ values exceeding the Err_Threshold in the Buffer needed to report a power control violation is known as N_Err_SIR. It is straightforward that N_Err_SIR can be set to any value between 1 and Buffer_Len. In another example, if at least N_Err_SIR (N_Err_SIR=1,... Buffer_Len) average error value(s) (i.e., N_Err_SIR number of $StR_{err\_ave}$ values) out of the last Buffer_Len (Buffer_Len ≥1) calculated $StR_{err\_ave}$ values) exceed Err_Threshold, the mobile is determined as a violator and the call is dropped.

One of the advantages of the proposed methodologies is that the methods may be immune to fading channel variations. In fading channels, the received SIR might jump up or down by a substantial amount. This could cause several up or down power commands in a row. The proposed methodologies are immune to these jumps. The metrics used in this approach are averages over a desired, given time duration to average out the instantaneous jumps in the received signal at the base station.

For example, the conventional approach is to count the number of consecutive down power commands sent by a base station to the mobile. The number is then compared to a threshold. If the number of consecutive down power commands exceeds the threshold, the mobile is declared in violation. Since there are an innumerable variety of scenarios that could lead to multiple down power commands being consecutively transmitted (an obvious one being that the mobile is transmitting at its minimum power and is close geographically to the base station), the threshold must be set to a substantially large number in order to achieve a low probability of false alarm. The conventional method has a substantially low probability of detection, since any deep fading, even for a short period of time, can lead to a generation of an up power command (due to low received SIR measurement) by the base station. This leads to an unnecessary resetting of the counter.

Benefits of the proposed methods include parameters (Err_Threshold, Avg_Time, N_Err_SIR and Buffer_Len) which can be adjusted so as to detect any mobile violation of a downlink power control command with a high probability. The proposed methodologies may help to reduce the probability of false alarm when a mobile ignores the TPC commands from base station(s) due to normal behavior i.e., when mobile is in simplex or non-handoff mode). This may be due in part to the fact that the proposed methods are immune to channel variations (fading environments).

Additionally, the parameters Err_Threshold, Avg_Time, N_Err_SIR and Buffer_Len can be chosen to have a duration larger than any of the duration of the false alarm scenarios described above. For example, in a UMTS network, the duration should not exceed 4 * 80 ms, thus reducing the probability of false alarm ($P_{FA}$) to be practically zero. In a simulation by the inventors to be described hereafter, for 20 minutes or 120 thousand frames, the observed $P_{FA}$ was equal to 0, which suggests a probability of false alarm below 8.33*e-6).

Example Simulations

As discussed in general above, one scenario in an example system (such as a UMTS network) where the mobile might be ignoring a power control command is when its active set is updated at the UMTS Terrestrial Radio Access Network (UTRAN) side. In this scenario, the RNC sends an update message such as "L3_ACTIVE_SET_UPDATE" to the UE (mobile) to update its active set. There may be a delay of 80 msec or more, during which the new Node B (base station) that is being updated in the UE's active set is transmitting and the UE does not listen to TPC commands from that Node B (only for adding or swapping). This delay could increase where there are poor radio link conditions, due to retransmission delay, for example.

Before uplink (UL) synchronization, a new leg (new Node B) sends all up power commands. After UL synchronization, TPC commands in the downlink (DL) will be ignored until the time at which the UE updates its active set.

Another scenario generally described above is when the UE drops a leg and the UTRAN is waiting for an update message to drop the leg such as a command "L3_ACTIVE_SET_UPDATE-CNF" from the UE. During this period, the UE ignores the TPC commands from that leg. As discussed above, the difference between the SIR measured by the Node B and the average target SIR can be observed to determine $SIR_{err}$, as shown by the following expression.

$$SIR_{err} = SIR_{actual} - SIR_{t\arg et\_ave}$$

In the above expression, $SIR_{err}$ and $SIR_{target\_ave}$ are averaged over the same, given time duration. The given time duration may be referred to as a measurement period or window. The window for averaging may be set to 80 msec, for example, although the example embodiments are not limited to an 80 millisecond window. In an example, if the average SIR error value ($SIR_{err\_ave}$) is greater than the threshold Err_Threshold for the given time duration, i.e., up to N_Err_SIR=Buffer_Lenconsecutive measurement periods, a violation is detected (i.e., the UE is detected as ignoring a TPC command). As $SIR_{err\_ave\_}$is readily available as a parameter in the current one-chip ASIC solutions for system integration every Avg_Time = 80 msec, the determination can be made with minimal computational complexity at desired processing speeds.

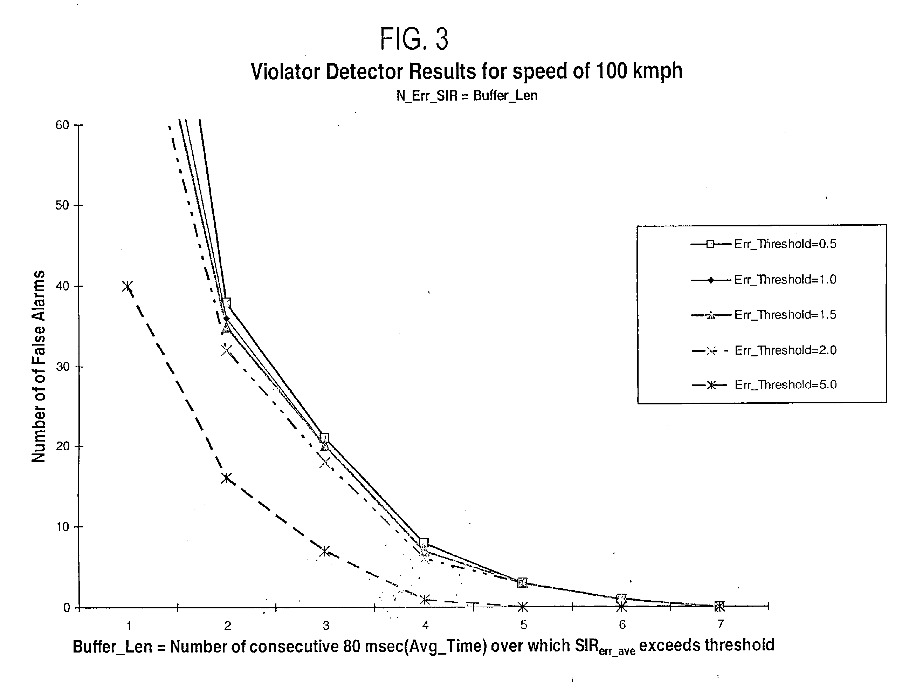

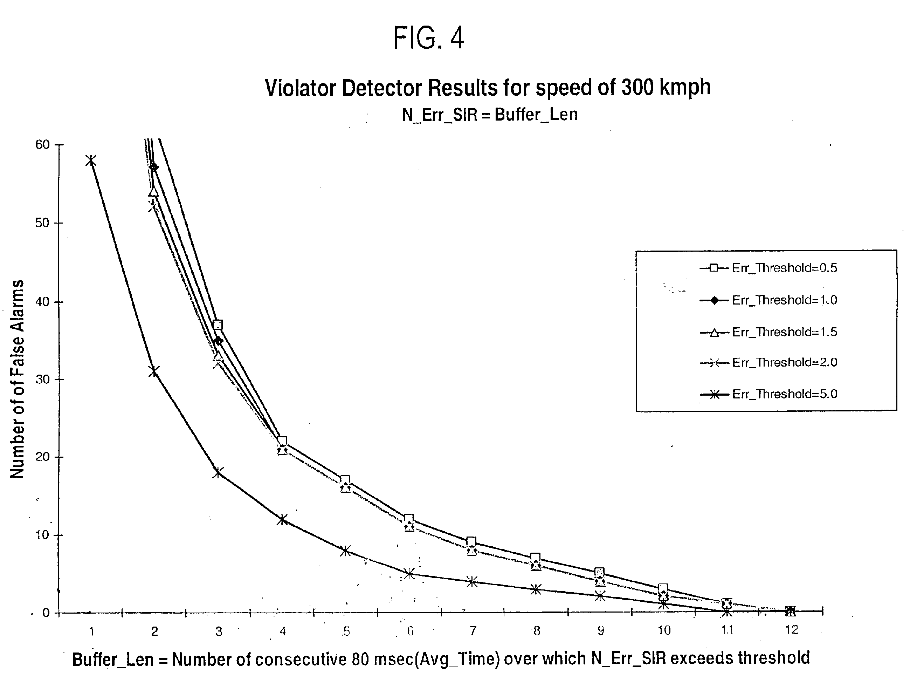

FIGS. 3 and 4 are graphs illustrating results from a simulation of the detection methodology in accordance with the example embodiments of the present invention.

The graphs in FIGS. 3 and 4 illustrate the number (n=N_Err_SIR-Buffer_Len) of consecutive 80 millisecond windows over which $SIR_{err\_ave}$ exceeds Err_Threshold, as a function of the number of false alarms. The following Table 1 lists the parameters set for the example simulation(s) of a given mobile and Node B in a UMTS network.

**Table 1: Parameters for Simulation**

| Set parameters |
|---|
| 12.2 kbps DL and UL |
| Denver pathloss file |
| Mobile speed: 100, 300 kmph |
| Pilot power: 33 dBm |
| UE max Tx power: 21 dBm |
| UE Min Tx power: -50 dBm |
| Node B Max Tx power: 33 dBm |
| Node B Min Tx power: -13 dB/Pilot |
| Inner loop power control step size: 1 Db |
| DL and UL target BLER: 1% |
| OLPC step up: 0.5 dB |
| Total NodeB Tx power: 43 dBm |
| DL orthogonal factor: 0.2 |
| DL loading: 50% (pilot Ec/Io = -7 dB) |

The simulation was run for 20 minutes at mobile speeds of 100 and 300 kmph. The 20 minute time exemplified a typical time for a call. The simulation parameters varied included Err_Threshold and Buffer_Len. The range of values evaluated for Err_Threshold was between 0 and 2 dB in steps of 0.5 dB. The range of values evaluated for Buffer_Len was between 1 and 16. For the simulation, the number of false alarms were counted over the duration of a the 20 minute call and plotted as a function of Buffer_Len. N_Err_SIR was always set to be equal to Buffer_Len.

As can be seen from the example simulation (s), the number of false alarms may be more sensitive to Buffer_Len, i.e., the number of consecutive 80 msec windows or measurement periods over which $SIR_{err\_ave}$ exceeds Err_Threshold to count a false alarm. As show in the example graphs, the threshold does not change the results much as far as Err_Threshold is greater than 0.5 dB. For mobile speeds up to 100 kmph in these particular simulations, a recommended value for Buffer_Len is shown as at least 7. For mobile speeds of 300 kmph Buffer_Len may be selected to be at least 12.

However, the selection of Buffer_Len, N_Err_SIR Err_Threshold and Avg_time is network-dependent. Accordingly, the above methodology may be employed for any network based on one or more of CDMA (IS95, cdma2000 and various technology variations), UMTS (release 99, R4, R5, R6 and above), GSM, 802.11 and/or related technologies, including communication systems or networks based on technologies other than the above, which may be in various stages of development and intended for future replacement of, or use with, the above networks or systems.

Accordingly, the parameters Err_Threshold, Avg_Time, N_Err_SIR and Buffer_Len used in the example methodologies are available at the base station receiver, and thus do not depend on a specific mobile. Therefore the example approach described herein may be substantially efficient so as to avoid any capacity loss, while being substantially cost effective.

The example embodiments of the present invention being thus described, it will be obvious that the same may be varied in many ways. Such variations are not to be regarded as departure from the spirit and scope of the example embodiments of the present invention, and all such modifications as would be obvious to one skilled in the art are intended to be included within the scope of the following claims.

**Claims**

1.  A method of detecting a mobile station that is not following a power control command, comprising:

    comparing, each time slot, a received signal-to-interference ratio (SIR) value of the mobile as measured by a given base station with a given average SIR target value (110);
    generating an error metric for each slot based on a difference between the measured SIR and average SIR target values (120);
    averaging the generated error metrics over a given time duration to determine at least one or more average error value(s) (130); and
    determining that the mobile station is violating a power control command if the at least one or more average error value(s) exceed a given threshold (150).

2.  The method of claim 1, further comprising:

    storing the at least one average error value in a buffer having a given buffer length (140),

    wherein a plurality of average SIR error values are stored in the buffer, and determining includes determining that the mobile station is violating a power control command if N stored average SIR error values in the buffer, N=1 up to a given buffer length, exceed the given threshold.

3. The method of claim 1, wherein the mobile determined as violating a power control command is violating the power control command for a reason other than
the mobile has determined that the power control command is not reliable, or
the mobile is adding a leg to its active set of base stations, or
the mobile is dropping a leg from its active set of base stations.

4. The method of claim 2, further comprising:

selecting values for the given time duration, given threshold and given buffer length so as to reduce the probability of false alarm while maximizing the probability of detection for the mobile that is not listening to power control commands, due to problems unknown at a network serving the mobile.

5. A method of determining whether to drop a call associated with a mobile station that is not following a power control command, comprising:

generating an error metric on a slot-by-slot basis based on a difference between a measured SIR value of the mobile at a given base station and a given, average SIR target value (210);
averaging the generated error metrics over a given time duration to determine at least one or more average error value(s) (220);
dropping a call associated with the mobile, if the at least one or more average error value(s) exceed a given threshold (240).

6. The method of claim 5, wherein dropping includes determining that the mobile station is violating a power control command if the at least one (or more) average error value(s) exceeds a given threshold.

7. The method of claim 6, wherein the mobile determined as violating a power control commend is violating the power control command for a reason other than
the mobile has determined that the power control command is not reliable, or
the mobile is adding a leg to its active set of base stations, or
the mobile is dropping a leg from its active set of base stations.

8. The method of claim 5, further comprising:

storing the at least one average error value in a buffer having a given buffer length (230).

9. The method of claim 8, wherein
a plurality of average SIR error values are stored in the buffer, and
dropping includes determining that the mobile station is violating a power control command if N stored average SIR error values, N= 1 up to a given buffer length, exceed the given threshold.

10. The method of claim 8, further comprising:

selecting values for the given time duration, threshold, buffer length and the number of errors exceeding threshold inside that buffer so as to reduce the probability of false alarm while maximizing the probability of detection for the mobile that is not listening to power control commands, due to problems unknown at a network serving the mobile.

## FIG. 1

```
┌─────────────────────────────────┐              ┌──────────────────────────────────────┐
│ Compare SIR_actual, measured    │              │ Average SIR_err (s) over 'Avg_Time'  │
│ every slot to SIR_target_ave    │─────────────▶│ to determine average SIR error value │
│                                 │              │ (SIR_err_ave)                        │
└─────────────────────────────────┘              └──────────────────────────────────────┘
                │                         └ 110                        │ └ 130         ◀── 100
                ▼                                                      ▼
┌─────────────────────────────────┐              ┌──────────────────────────────────────┐
│ Calculate SIR_err metric        │              │ Store SIR_err_ave value(s) in FIFO   │
│                                 │──────────────│ buffer having set 'Buffer_Len'       │
└─────────────────────────────────┘              └──────────────────────────────────────┘
                      └ 120                                   │ └ 140              150
                                                              ▼
                                          ┌──────────────────────────────────────────┐
                                          │ If at least 'N_Err_SIR' value(s) of       │
                                          │ SIR_err_ave value(s) in buffer exceed     │
                                          │ 'Err_Threshold', mobile determined to     │
                                          │ violate power control commands            │
                                          └──────────────────────────────────────────┘
```

## FIG. 2

```
┌─────────────────────────────────┐              ┌──────────────────────────────────────┐
│ Generate SIR_err metric on a    │              │ Store SIR_err_ave value(s) in FIFO   │
│ slot-by-slot basis based on     │─────────────▶│ buffer having set 'Buffer_Len'       │
│ difference SIR_actual and       │              │                                      │
│ SIR_target_ave values           │              └──────────────────────────────────────┘
└─────────────────────────────────┘                            │ └ 230        ◀── 200
                │         └ 210                                 ▼
                ▼                                 ┌──────────────────────────────────────┐
┌─────────────────────────────────┐              │ If at least 'N_Err_SIR' value(s) of   │
│ Average SIR_err metric(s) over  │              │ SIR_err_ave value(s) in buffer exceed │
│ 'Avg_Time' to determine         │              │ 'Err_Threshold', network drops call   │
│ SIR_err_ave                     │              │ associated with mobile (mobile        │
└─────────────────────────────────┘              │ violating power control command)      │
                      └ 220                        └──────────────────────────────────────┘
                                                                          └ 240
```

# FIG. 3

## Violator Detector Results for speed of 100 kmph

N_Err_SIR = Buffer_Len

Legend:
- —□— Err_Threshold=0.5
- —◆— Err_Threshold=1.0
- —▲— Err_Threshold=1.5
- —✕ - Err_Threshold=2.0
- —✱— Err_Threshold=5.0

Y-axis: Number of of False Alarms

Buffer_Len = Number of consecutive 80 msec(Avg_Time) over which $SIR_{err\_ave}$ exceeds threshold

EP 1 708 384 A1

FIG. 4

## Violator Detector Results for speed of 300 kmph
### N_Err_SIR = Buffer_Len

Legend:
- —□— Err_Threshold=0.5
- —◆— Err_Threshold=1.0
- —△— Err_Threshold=1.5
- —✳— Err_Threshold=2.0
- —✱— Err_Threshold=5.0

y-axis: Number of of False Alarms

Buffer_Len = Number of consecutive 80 msec(Avg_Time) over which N_Err_SIR exceeds threshold

EP 1 708 384 A1

**European Patent Office**

**EUROPEAN SEARCH REPORT**

Application Number

EP 06 25 1056

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 185 431 B1 (LI KAIPING ET AL) 6 February 2001 (2001-02-06) * abstract * * column 2, line 13 - column 3, line 8 * ----- | 1,5 | INV. H04B7/005 |
| A | EP 1 503 516 A (NEC CORPORATION) 2 February 2005 (2005-02-02) * abstract * * paragraph [0054] * ----- | 1,5 | |
| | | | TECHNICAL FIELDS SEARCHED (IPC) |
| | | | H04B |

The present search report has been drawn up for all claims

| Place of search | Date of completion of the search | Examiner |
|---|---|---|
| The Hague | 21 April 2006 | Lustrini, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 25 1056

This annex lists the patent family members relating to the patent documents cited in  the above-mentioned European search report.
The members are as contained in the European Patent Office EDP file on
The European Patent Office is in no way liable for these particulars which are merely  given for the purpose of information.

21-04-2006

| Patent document cited in search report | | Publication date | Patent family member(s) | | Publication date |
|---|---|---|---|---|---|
| US 6185431 | B1 | 06-02-2001 | NONE | | |
| EP 1503516 | A | 02-02-2005 | CN | 1585295 A | 23-02-2005 |
| | | | JP | 2005051571 A | 24-02-2005 |
| | | | US | 2005026641 A1 | 03-02-2005 |

EPO FORM P0459

For more details about this annex : see Official Journal of the European Patent Office, No. 12/82